# EUROPÄISCHE PATENTSCHRIFT

(11) **EP 0 878 981 B1**
(45) Veröffentlichungstag und Bekanntmachung des Hinweises auf die Patenterteilung: **12.10.2005**
(21) Anmeldenummer: 98108061.7
(22) Anmeldetag: 04.05.1998
(51) Int. Cl.: H05B 39/04, G05B 19/042

(54) **Konstantstromregler**
Current stabiliser
Stabilisateur de courant

(30) Priorität: 16.05.1997 DE 19720732
(43) Veröffentlichungstag der Anmeldung: 18.11.1998
(73) Patentinhaber: SIEMENS AKTIENGESELLSCHAFT, 80333 München (DE)
(72) Erfinder: Boon, Julien, 1640 Sint-Genesius-Rode (BE); Vandevoorde, Jean-Claude, 1820 Steenkokkerzeel (BE)

(56) Entgegenhaltungen:
- EP-A- 0 287 992
- EP-A- 0 416 942
- WO-A-96/08098
- DE-A- 3 225 455
- DE-A- 4 021 361
- DE-A- 19 520 596

## Beschreibung

Die Erfindung bezieht sich auf einen Konstantstromregler zur Regelung und Überwachung des einem nachgeschalteten Verbraucher oder mehreren nachgeschalteten Verbrauchern zugeführten Stroms und zur Vergleichmäßigung des dem nachgeschalteten Verbraucher oder den nachgeschalteten Verbrauchern zugeführten Stroms auf dem Regelniveau bzw. bei einer Änderung des Regelniveaus.

Derartige Konstantstromregler kommen häufig in Steuer-, Regel- und Überwachungsanlagen zum Einsatz. Die Anforderungen von derartigen häufig in Verkehrs- und Industrieanlagen eingesetzten Steuer-, Regel- und Überwachungskreisen nehmen ständig zu, wobei einerseits die zu steuernden, regelnden und überwachenden Sachverhalte immer komplizierter werden und andererseits die Anforderungen an die Genauigkeit und Betriebssicherheit der Steuerung, Regelung und Überwachung ständig erhöht werden.

Aus der DE 195 20 596 A1 ist eine Anordnung zum Übertragen von Daten und Energie, insbesondere einer ersten Versorgungsspannung, zwischen mehreren Geräten einer Anlage über eine erste Busleitung bekannt. Es ist eine Einrichtung zur Überwachung der ersten Busleitung vorgesehen, die beim Auftreten einer Störung auf der ersten Busleitung die Datenübertragung und/oder die Energieversorgung der Geräte auf einer zweiten Busleitung aktiviert.

Die EP 0 287 992 A2 offenbart ein hoch verfügbares Bussystem mit mindestens zwei Busleitungen, über die jeweils identische Nachrichten seriell übertragen werden, und mit einer Prüflogik zur Funktionsprüfung der Busse. Zur Verbesserung der Funktionsprüfung der Busleitungen werden vorgegebene Prüfzeichen mit einer Detektierlogik ausgewertet und ein Umschaltsignal für die fehlerfreie Busleitung erzeugt.

Die EP 0 416 942 A2 zeigt ein zwei Busse bzw. Busleitungen aufweisendes Bussystem, bei dem jeder Teilnehmer an die beiden Busleitungen bzw. Busse angeschlossen ist und mittels beider Busleitungen bzw. Busse mit Daten versorgbar ist. Die Beaufschlagung jedes Teilnehmers mit Daten erfolgt zu jedem Zeitpunkt immer nur über einen Bus des Bussystems. So fern teilnehmerseitig festgestellt wird, dass die übermittelten Daten fehlerhaft sind, wird auf den jeweils anderen Bus bzw. die andere Busleitung umgeschaltet. Dies kann für alle Teilnehmer simultan geschehen.

Der Erfindung liegt die Aufgabe zugrunde, den eingangs geschilderten Konstantstromregler derart weiterzubilden, daß er gesteigerten Anforderungen hinsichtlich seiner Betriebssicherheit und Zuverlässigkeit genügen kann und andererseits zu einer erheblichen Ausdehnung der Lebensdauer ihm nachgeschalteter Verbraucher beiträgt.

Diese Aufgabe wird erfindungsgemäß gelöst, durch einen Konstantstromregler mit den Merkmalen des Anspruchs 1.

Aufgrund der redundanten Einleitung der Steuersignale in den erfindungsgemäßen Konstantstromregler kann sichergestellt werden, daß ein zuverlässiger und korrekter Betrieb des Konstantstromreglers auch in einem solchen Fall aufrecht erhalten wird, daß die mittels des einen oder des anderen Busses in den Konstantstromregler eingegebenen Steuersignale Störungen unterworfen bzw. verfälscht sind. Aufgrund der Plausibilitäts-/Konformitätsprüfung, die intern innerhalb des Konstantstromreglers abläuft, ist feststellbar, ob die Steuersignale des einen oder die Steuersignale des anderen Busses verfälscht bzw. gestört sind. Bei Auftreten der Störung der Steuersignale des einen oder des anderen Busses erfolgt automatisch die Berücksichtigung der ungestörten Steuersignale des jeweils anderen Busses beim Betrieb des Konstantstromreglers. Der nachgeschaltete Verbraucher bzw. die nachgeschalteten Verbraucher werden somit mit größerer Zuverlässigkeit als beim Stand der Technik mit der für sie vorgesehenen Stromstärke beaufschlagt. Erfindungsgemäß wird somit der Konstantstromregler quasi mit einer redundanten Multidrop-Bussteueranlage ausgerüstet, was den bei heutigen Einsatzbedingungen erhöhten Sicherheits- und Zuverlässigkeitsanforderungen genügt, da bei Störungen bzw. Ausfall eines der beiden Busse automatisch auf den funktionierenden Bus umgeschaltet wird. Grundsätzlich ist es möglich, vorhandene Konstantstromregler, die mittels eines Busses gesteuert und überwacht werden, durch einen weiteren Bus und entsprechende Ergänzungsbauteile erfindungsgemäß nachzurüsten. Sofern erforderlich, können die durch die beiden Busse des erfindungsgemäßen Konstantstromreglers gesteuerten und/oder überwachten Parameter bei sich ändernden Anforderungen ausgedehnt oder angepaßt werden.

Zweckmäßigerweise läßt sich die erfindungsgemäß vorgesehene Plausibilitäts-/Konformitätsprüfung der von den Bussen in den Konstantstromregler eingegebenen Steuersignale mittels eines Mikroprozessors durchführen, der als einfacher Prozessor ausgestaltet sein und für jeden der beiden Busse einen separaten Steuereingang aufweisen kann. Ergibt eine Plausibilitäts-/Konformitätsprüfung der von den beiden Bussen eingehenden Steuersignale eine Störung bzw. Verfälschung der an einem der beiden Steuereingänge anliegenden Steuersignale, schaltet der Mikroprozessor automatisch zu dem Steuereingang um, an dem diejenigen Steuersignale anliegen, deren Plausibilitäts-/Konformitätsprüfung zu einem positiven Ergebnis geführt hat.

Zweckmäßigerweise weist der Mikroprozessor des erfindungsgemäßen Konstantstromreglers für den einen Bus einen digitalen Steuereingang und für den anderen Bus einen seriellen Steuereingang auf.

In einer vorteilhaften Ausführungsform sind die Steuereingänge des Mikroprozessors dual ausgebildet und voneinander isoliert. Durch die Isolierung der beiden Steuereingänge voneinander wird ein systematischer Schaden an beiden Steuereingängen verhindert, wobei die Isolierung der beiden Steuereingänge auch gegen Erde und gegen die weiteren Mikroprozessor-Schaltungen wirkt.

In einer vorteilhaften Ausführungsform des erfindungsgemäßen Konstantstromreglers ist dem digitalen Steuereingang des Mikroprozessors ein asynchroner Empfänger/Sender vorgeschaltet, dessen Ausgangssignale dem digitalen Steuereingang des Mikroprozessors zugeführt wird und dem ein Sender/Empfänger vorgeschaltet ist, der galvanisch isoliert ist, dual arbeitet und an einen dem einen Bus zugeordneten ersten Buseingang angeschlossen ist.

Dem seriellen Steuereingang des Mikroprozessors ist ein weiterer Sender/Empfänger vorgeschaltet, der galvanisch isoliert ist, dual arbeitet und an einem dem anderen Bus zugeordneten zweiten Buseingang angeschlossen ist. Der weitere Sender/Empfänger kann mit dem erstgenannten Sender/Empfänger, der dem digitalen Steuereingang des Mikroprozessors zugeordnet ist, mehr oder weniger identisch ausgebildet sein. Aufgrund der trotz weitgehend identischer Ausgestaltung der beiden Sender/Empfänger asymmetrischen Gestaltung der dem digitalen bzw. seriellen Steuereingang zugeordneten Eingangsbereiche des Mikroprozessors besteht, wenn überhaupt, lediglich eine sehr geringe Wahrscheinlichkeit dafür, daß im Falle eines Grenzsignals ein Totalausfall auftritt.

Vorteilhaft können der Mikroprozessor, der asynchrone Empfänger/Sender, die beiden Sender/Empfänger und die beiden Buseingänge im Rahmen einer Flachbaugruppe realisiert werden, die ihrerseits in einfacher Weise an das Hauptteil des Konstantstromreglers montiert werden kann.

Wenn der Konstantstromregler bei Behebung einer Störung auf denjenigen Betriebszustand zurückgesetzt wird, der für den Fall vorgesehen ist, daß beide Busse störungsfrei arbeiten, wobei dann die Steuersignale des einen oder des anderen Busses dem Betrieb des Konstantstromreglers zugrundegelegt werden, ist sichergestellt, daß immer dann, wenn es möglich ist, der Konstantstromregler in der sichersten Betriebsweise arbeitet.

Sofern der erfindungsgemäße Konstantstromregler als Arbeitseinheit eines mehrere derartige als Arbeitseinheiten ausgebildete Konstantstromregler aufweisenden Steuer- und Überwachungskreises ausgebildet ist, wobei an einer Substation des Steuer- und Überwachungskreises eine Haupteinheit installiert ist, von der mittels der beiden Busse die einzelnen Arbeitseinheiten zu vorgebbaren Zeitpunkten zur Statusinformation und Steuerung abrufbar sind, lassen sich mit einem vergleichsweise geringen technischen Aufwand hochfunktionelle und zuverlässige Steuer- und Überwachungskreise für sehr große und komplizierte Anlagen verwirklichen.

Wenn der erfindungsgemäße Konstantstromregler Bestandteil eines Steuer- und Überwachungskreises ist, dessen dem Konstantstromregler vorgeschaltete Bestandteile redundant ausgebildet sind, kann eine große Betriebssicherheit dieses Steuer- und Überwachungskreises erreicht werden, obwohl innerhalb des Konstantstromreglers bzw. innerhalb in dem Steuer- und Überwachungskreis vorhandener weiterer erfindungsgemäßer Konstantstromregler jeweils lediglich ein Mikroprozessor vorgesehen ist, wobei es sich hierbei um einen Kommunikationsprozessor vergleichsweise einfacher Ausführung handeln kann.

Vorteilhafterweise können mit dem erfindungsgemäßen Konstantstromregler herkömmliche Feldbusse eingesetzt werden, z.B. MOD-Busse, PROFI-Busse, CAN-Busse od.dgl. Hierdurch und durch die Verfügbarkeit vergleichsweise wenig kostenaufwendiger Telekommunikations- und Rechnertechnologie ist es möglich, den erfindungsgemäßen Konstantstromregler mit einem vergleichsweise geringen und demgemäß vertretbaren wirtschaftlichen Aufwand herzustellen.

Die Montage und ein etwaiger Notfallaustausch geht nur mit einem vergleichsweise geringen Aufwand einher, da für die Steuer- und Überwachungseingänge einfache Verbinder eingesetzt werden können.

Der erfindungsgemäße Konstantstromregler ist mit unterschiedlichen Verbrauchern kombinierbar, z.B. mit Steuer-/Überwachungseinrichtungen für Einzel- oder Gruppenbeleuchtungskörper, Schalteinrichtungen, Hochspannungseinrichtungen, Bewässerungssteuerungen, Kraftstoffsteuerungen ud.dgl.

Darüber hinaus ist ein mit erfindungsgemäßen Konstantstromreglern ausgerüsteter Steuer- und Überwachungskreis sehr flexibel, da mittels dem erfindungsgemäßen Konstantstromregler unterschiedliche nachgeschaltete, in einem lokalen Bereich vorgesehene Verbraucher geregelt und überwacht werden können, wobei die Steuerung dieser unterschiedlichen Verbraucher durch dieselben beiden Busse bzw. jeweils einen dieser beiden Busse vorgenommen werden kann.

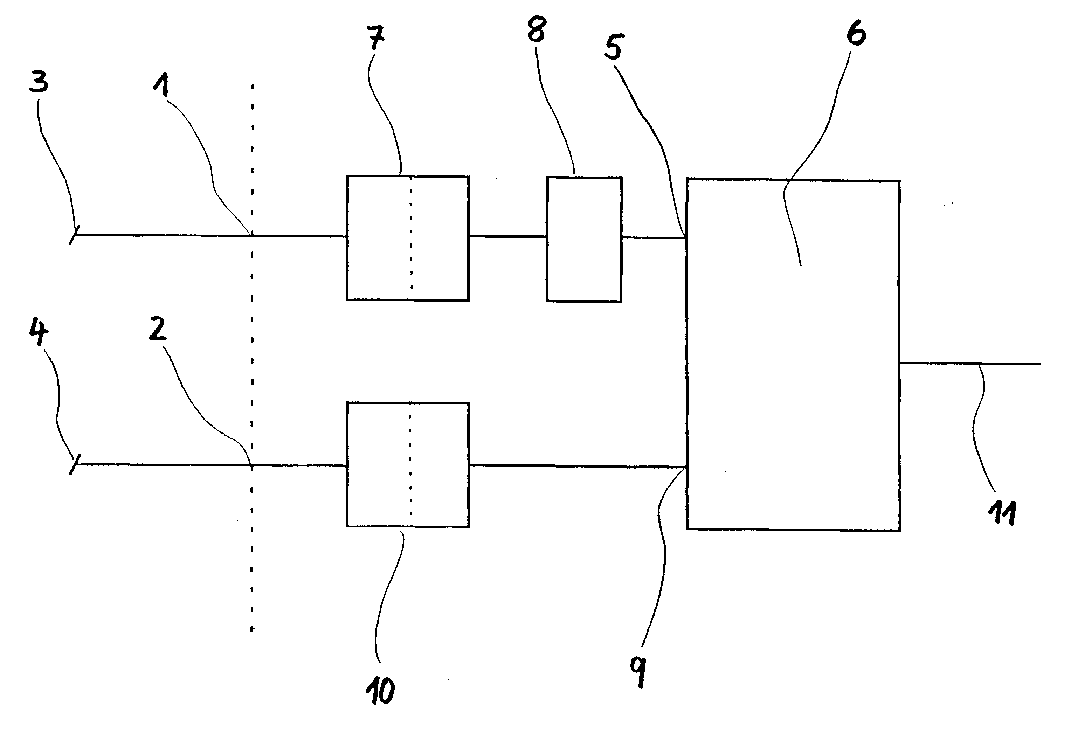

Im folgenden wird die Erfindung an Hand einer Ausführungsform unter Bezugnahme auf die Zeichnung näher erläutert, in der die für die Erfindung wesentlichen Teile einer Ausführungsform des erfindungsgemäßen Konstantstromreglers prinzipiell dargestellt sind.

Ein in der einzigen Figur dargestellter vorderer Eingangsbereich eines erfindungsgemäßen Konstantstromreglers hat zwei Buseingänge 1, 2; der Buseingang 1 ist einem ersten Bus 3 zugeordnet, wohingegen der Buseingang 2 einem zweiten Bus 4 zugeordnet ist.

Zwischen dem dem ersten Bus 3 zugeordneten Buseingang 1 und einem digitalen Steuereingang 5 eines Mikroprozessors 6 ist ein Sender/Emfänger 7 angeordnet, wobei zwischen dem Sender/Empfänger 7 und dem digitalen Steuereingang 5 des Mikroprozessors 6 ein asynchroner Empfänger/Sender 8 sitzt.

Zwischen dem dem zweiten Bus 4 zugeordneten Buseingang 2 und einem seriellen Steuereingang 9 des Mikroprozessors 6 weist die in der einzigen Figur dargestellte Anordnung einen weiteren Sender/Empfänger 10 auf. Der Sender/Empfänger 10 kann mehr oder weniger identisch mit dem Sender/Empfänger 7 ausgebildet sein.

Die gestrichelte Linie in der einzigen Figur trennt den Bereich außerhalb des Konstantstromreglers vom Eingangs- bereich des Konstantstromreglers. Eine Ausgangsleitung 11 des Mikroprozessors 6 führt zu den Hauptschaltanordnungen des im übrigen nicht dargestellten erfindungsgemäßen Konstantstromreglers.

Der Eingangsbereich des erfindungsgemäßen Konstantstromreglers und damit der Mikroprozessor 6 wird durch den ersten Bus 3 und durch den zweiten Bus 4 mit einander entsprechenden Steuersignalen beaufschlagt. Im Betrieb des mit der in der einzigen Figur dargestellten Schaltung versehenen Konstantstromreglers sind demgemäß folgende unterschiedliche Fälle denkbar:
- Beide Busse 3, 4 sind in einem ordnungsgemäßen Zustand.

Der Sender/Empfänger 7 erhält durch den Buseingang 1 Steuersignale vom ersten Bus 3; der Sender/Empfänger 10 erhält durch den Buseingang 2 Steuersignale vom zweiten Bus 4. Aus dem Sender/Empfänger 7 geraten die Steuersignale durch den asynchronen Empfänger/Sender 8 an den digitalen Steuereingang 5 des Mikroprozessors 6. Aus dem Sender/Empfänger 10 geraten die Steuersignale durch den seriellen Steuereingang 9 zum Mikroprozessor 6. Der Mikroprozessor 6 unterzieht die ihm durch den digitalen Steuereingang bzw. den seriellen Steuereingang 9 eingegebenen Steuersignale einer separaten Plausibilitäts-/Konformitätsprüfung, bei der auch etwaige Übertragungsfehler ermittelt werden können. Da beide Busse 3, 4 ordnungsgemäß arbeiten, kann der Konstantstromregler sowohl auf der Grundlage der vom Bus 3 als auch auf der Grundlage der vom Bus 4 stammenden Steuersignale betrieben werden. Je nach interner Vorauswahl innerhalb des Konstantstromreglers werden daher die aus dem Bus 3 bzw. aus dem Bus 4 stammenden Steuersignale zur Grundlage des Betriebs des Konstantstromreglers gemacht und werden entsprechend Überwachungszwecken dienende Daten in den Bus 3 bzw. in den Bus 4 eingegeben.
- Der Bus 3 arbeitet nicht ordnungsgemäß, der Bus 4 arbeitet ordnungsgemäß.

Der Sender/Empfänger 10 erhält durch den Buseingang 2 vom Bus 4 korrekte Steuersignale und leitet diese weiter an den seriellen Steuereingang 9 des Mikroprozessors 6 des Konstantstromreglers. Diese Steuersignale werden vom Mikroprozessor 6 analysiert und, da der Bus 4 ordnungsgemäß arbeitet, als korrekt ermittelt.

Der Sender/Empfänger 7 erhält durch den Buseingang 1 fehlerhafte Steuersignale vom fehlerhaft arbeitenden Bus 3. Diese fehlerhaften Steuersignale passieren den dem Sender/Empfänger 7 nachgeschalteten asynchronen Empfänger/Sender 8. Somit erreichen fehlerhafte Steuersignale durch den digitalen Steuereingang 5 den Mikroprozessor 6, der diese Steuersignale analysiert und als Ergebnis der Plausibilitäts-/Konformitätsprüfung als fehlerhafte Steuersignale erfaßt.

Im Mikroprozessor 6 wird entschieden, daß der Betrieb des Konstantstromreglers aufgrund der durch den ordnungsgemäß arbeitenden Bus 4 in den Eingangsbereich des Konstantstromreglers eingegebenen Steuersignale erfolgt. Entsprechende Signale werden durch die Ausgangsleitung 11 des Mikroprozessors 6 an die nachgeschalteten Bereiche des Konstantstromreglers gegeben.

Mittels des korrekt arbeitenden Busses 4 wird ein "Vorsicht"-Signal in geeigneter Form ausgegeben, mittels dem der fehlerhafte Betrieb des Busses 3 angezeigt wird. Überwachungszwekken dienende Daten werden vom Konstantstromregler mittels des ordnungsgemäß arbeitenden Busses 4 an vorgeschaltete Bereiche des Steuerkreises übermittelt.
- Der Bus 3 arbeitet ordnungsgemäß und der Bus 4 arbeitet fehlerhaft.

Der Sender/Empfänger 7 erhält vom Bus 3 durch den Buseingang 1 korrekte Steuersignale und leitet diese über den ihm nachgeschalteten asynchronen Empfänger/Sender 8 an den digitalen Steuereingang des Mikroprozessors; diese Steuersignale werden im Mikroprozessor 6 einer Plausibilitäts-/Konformitätsprüfung unterzogen und, da der Bus 3 ordnungsgemäß arbeitet, als fehlerfrei bzw. korrekt ermittelt.

Der Sender/Empfänger 10 erhält vom Bus 4 durch den Buseingang 2 fehlerhafte Steuersignale, die am seriellen Steuereingang 9 des Mikroprozessors 6 ankommen. Im Mikroprozessor 6 werden diese Steuersignale einer Plausibilitäts-/Konformitätsprüfung unterzogen, deren Ergebnis ergibt, daß es sich um fehlerhafte Steuersignale handelt. Im Mikroprozessor 6 wird daher entschieden, daß die durch den korrekt arbeitenden Bus 3 in den Konstantstromregler eingegebenen Steuersignale dem Betrieb des Konstantstromreglers zugrundelegt werden. Entsprechende Signale werden vom Mikroprozessor 6 durch dessen Ausgangsleitung 11 in die nachgeschalteten Bereiche des Konstantstromreglers eingegeben. Durch den Bus 3 wird ein "Vorsicht"-Signal ausgegeben, mittels dem angezeigt wird, daß der Bus 4 fehlerhaft arbeitet. Überwachungszwecken dienende Daten werden vom Konstantstromregler zwangsweise durch den ordnungsgemäß arbeitenden Bus 3 an dem Bus 3 vorgeschaltete Bereiche des Steuer- und überwachungskreises weitergegeben.

Sowohl der Bus 3 als auch der Bus 4 arbeiten nicht ordnungsgemäß.

Der digitale Steuereingang 5 des Mikroprozessors 6 erhält über den asynchronen Empfänger/Sender 8, den Sender/Empfänger 7 und den Buseingang 1 fehlerhafte Steuersignale vom fehlerhaft arbeitenden ersten Bus 3; der serielle Steuereingang 9 des Mikroprozessors 6 erhält über den Sender/Empfänger 10 und den Buseingang 2 fehlerhafte Steuersignale vom fehlerhaft arbeitenden zweiten Bus 4. Im Mikroprozessor 6 wird mittels der separat vorgenommenen Plausibilitäts-/Konformitätsprüfungen festgestellt, daß sowohl die vom Bus 3 als auch die vom Bus 4 stammenden Steuersignale fehlerhaft sind. Der Mikroprozessor 6 beendet daher die Signalabgabe an die Busse 3, 4 und setzt darüber hinaus eine in bekannter Weise ausgestaltete lokale Steuerverriegelung frei. Weder die vom Bus 3 noch die vom Bus 4 stammenden fehlerhaften Steuersignale werden dem Betrieb des dem Mikroprozessor 6 nachgeschalteten Bereichs des Konstantstromreglers zugrundegelegt. Stattdessen hält der Konstantstromregler entweder seinen bisherigen Betriebszustand bei oder aber er geht auf einen im vorhinein für den Ausfall beider Busse 3, 4 festgelegten Betriebszustand über; grundsätzlich kann es möglich sein, den bisherigen Betriebszustand beizubehalten oder auf den vorher festgelegten Betriebszustand überzugehen, wobei dann in Abhängigkeit von anderen Parametern im Mikroprozessor 6 eine entsprechende interne Vorauswahl getroffen werden kann.

Nach Ablauf einer vorgebbaren Zeitspanne wird seitens einer Haupteinheit, der der betreffende Konstantstromregler im Überwachungs- und Steuerkreis zugeordnet ist, ein ALARMSignal ausgegeben, welches anzeigt, daß der betreffende Konstantstromregler nicht mehr durch die Busse 3, 4 gesteuert werden kann.

Zwischen dieser Haupteinheit und den ihr zugeordneten Arbeitseinheiten bzw. Konstantstromreglern werden geeignete, gut koordinierte Zeitsperren für die Haupteinheit und für die Arbeitseinheiten eingeführt.

Wenn die Steuersignale, welche von den Bussen 3, 4 übertragen werden, wiederhergestellt sind bzw. wenn die Busse 3, 4 wieder ordnungsgemäß arbeiten, wird diese Situation erfaßt; diejenige Betriebsweise des Konstantstromreglers, wie sie für den Fall, daß sowohl der Bus 3 als auch der Bus 4 ordnungsgemäß arbeitet, beschrieben wurde, wird wieder aufgenommen. Hierdurch wird stets sichergestellt, daß der Konstantstromregler in der zuverlässigsten und sichersten Betriebsweise betrieben wird, wenn dies möglich ist.

## Patentansprüche

1. Konstantstromregler zur Regelung und Überwachung des einem nachgeschalteten Verbraucher oder mehreren nachgeschalteten Verbrauchern zugeführten Stroms und zur Vergleichmäßigung des dem nachgeschalteten Verbraucher oder den nachgeschalteten Verbrauchern zugeführten Stroms auf dem Regelniveau bzw. bei einer Änderung des Regelniveaus, wobei der Konstantstromregler mittels zweier voneinander unabhängiger separater Busse (3,4) ständig mit Steuersignalen mit einem ähnlichen Regelungs-/Überwachungsinhalt beaufschlagbar ist, wobei mittels eines Mikroprozessors (6) des Konstantstromreglers eine getrennte Plausibilitäts-/Konformitätsprüfung der Steuersignale aus dem einen Bus (3) und der Steuersignale aus dem anderen Bus (4) durchführbar ist, wobei für den Fall der Feststellung der Nichtplausibilität/ Konformität der Steuersignale des einen (3) oder des anderen Busses (4) dem Betrieb des Konstantstromreglers die Steuersignale des anderen (4) bzw. des einen Busses (3) zugrundelegbar sind, und wobei der Mikroprozessor (6) für den einen Bus (3) einen digitalen Steuereingang (5) und für den anderen Bus (4) einen seriellen Steuereingang (9) aufweist.

2. Konstantstromregler nach Anspruch 1, dessen Mikroprozessor (6) für jeden Bus (3,4) einen separaten Steuereingang (5,9) aufweist.

3. Konstantstromregler nach Anspruch 1 oder 2, bei dem die Steuereingänge (5,9) des Mikroprozessors (6) dual ausgebildet und voneinander, von Erde und vom übrigen Mikroprozessor (6) isoliert sind.

4. Konstantstromregler nach einem der Ansprüche 1 bis 3, bei dem dem digitalen Steuereingang (5) des Mikroprozessors (6) ein asynchroner Empfänger/Sender (8) vorgeschaltet ist, dessen Ausgangssignal dem digitalen Steuereingang (5) des Mikroprozessors (6) zugeführt wird und dem ein Sender/Empfänger (7) vorgeschaltet ist, der galvanisch isoliert ist, dual arbeitet und an einem dem einen Bus (3) zugeordneten ersten Buseingang (1) angeschlossen ist.

5. Konstantstromregler nach einem der Ansprüche 1 bis 4, bei dem dem seriellen Steuereingang (9) des Mikroprozessors (6) ein weiterer Sender/Empfänger (10) vorgeschaltet ist, der galvanisch isoliert ist, dual arbeitet und an einen dem anderen Bus (4) zugeordneten zweiten Buseingang (2) angeschlossen ist.

6. Konstantstromregler nach Anspruch 5, bei dem der Mikroprozessor (6), der asynchrone Empfänger/Sender (8), die beiden Sender/Empfänger (7,10) und die beiden Buseingänge (1,2) in einer Flachbaugruppe zusammengefaßt sind.

7. Konstantstromregler nach einem der Ansprüche 1 bis 6, der bei Behebung einer Störung auf denjenigen Betriebszustand zurücksetzbar ist, der für den Fall vorgesehen ist, daß beide Busse (3,4) störungsfrei arbeiten, wobei dann die Steuersignale des einen (3) oder des anderen Busses (4) dem Betrieb des Konstantstromreglers zugrundegelegt werden.

8. Konstantstromregler nach einem der Ansprüche 1 bis 7, der als Arbeitseinheit eines mehrere derartige als Arbeitseinheiten ausgebildete Konstantstromregler aufweisenden Steuer- und Überwachungskreises ausgebildet ist, wobei an einer Substation des Steuer- und Überwachungskreises eine Haupteinheit installiert ist, von der mittels der beiden Busse (3,4) die einzelnen Arbeitseinheiten zu vorgebbaren Zeitpunkten zur Statusinformation und Steuerung abrufbar sind.

9. Konstantstromregler nach einem der Ansprüche 1 bis 8, der Bestandteil eines Steuer- und Überwachungskreises ist, dessen dem Konstantstromregler vorgeschaltete Bestandteile redundant ausgebildet sind.

10. Konstantstromregler nach einem der Ansprüche 1 bis 9, bei dem als Busse (3,4) herkömmliche Feldbusse, z.B. MOD-Busse, PROFI-Busse, CAN-Busse od.dgl. einsetzbar sind.

11. Konstantstromregler nach einem der Ansprüche 1 bis 10, bei dem als Steuer- und Überwachungseingänge einfache Verbinder vorgesehen sind.

12. Konstantstromregler nach einem der Ansprüche 1 bis 11, der mit unterschiedlichen Verbrauchern kombinierbar ist.

13. Konstantstromregler nach einem der Ansprüche 1 bis 12, mittels dem unterschiedliche nachgeschaltete, in einem lokalen Bereich vorgesehene Verbraucher überwach- und regelbar sind.

## Claims

1. Constant-current regulator for regulating and monitoring the current fed to a downstream load or to a plurality of downstream loads, and for evening out the current fed to the downstream load or to the downstream loads at the control level or when there is a change in the control level, wherein control signals having a similar regulating/monitoring content can be constantly applied to the constant-current regulator by means of two mutually independent, separate busses (3, 4), wherein a microprocessor (6) of the constant-current regulator can be used to carry out a separate plausibility/conformity check of the control signals from the first bus (3) and the control signals from the second bus (4), and wherein if lack of plausibility/conformity is ascertained for the control signals from the first bus (3) or from the second bus (4), the control signals from the second bus (4) or from the first bus (3), respectively, can be used as a basis for operation of the constant-current regulator, and wherein the microprocessor (6) has a digital control input (5) for the first bus (3) and a serial control input (9) for the second bus (4).

2. Constant-current regulator according Claim 1, the microprocessor (6) of which has a separate control input (5, 9) for each bus (3, 4).

3. Constant-current regulator according to one of Claim 1 or 2, in which the control inputs (5, 9) of the microprocessor (6) are of dual design and are insulated from one another, from earth and from the rest of the microprocessor (6).

4. Constant-current regulator according to one of Claims 1 to 3, in which an asynchronous receiver/transmitter (8) is connected upstream of the digital control input (5) of the microprocessor (6), the output signal of which receiver/transmitter is fed to the digital control input (5) of the microprocessor (6), and a transmitter/receiver (7) is connected upstream of said receiver/transmitter, is electrically insulated and of dual operation and is connected to a first bus input (1) assigned to the first bus (3).

5. Constant-current regulator according to one of Claims 1 to 4, in which a further transmitter/receiver (10) is connected upstream of the serial control input (9) of the microprocessor (6), is electrically insulated and of dual operation and is connected to a second bus input (2) assigned to the second bus (4).

6. Constant-current regulator according to Claim 5, in which the microprocessor (6), the asynchronous receiver/transmitter (8), the two transmitters/receivers (7, 10) and the two bus inputs (1, 2) are combined in a printed circuit board assembly.

7. Constant-current regulator according to one of Claims 1 to 6, which, in the course of remedying interference, can be reset to that operating state which is provided for the situation where both busses (3, 4) operate free from interference, the control signals of the first bus (3) or the second bus (4) then being taken as a basis for operation of the constant-current regulator.

8. Constant-current regulator according to one of Claims 1 to 7, which is designed as an operational unit of a control and monitoring circuit having a plurality of such constant-current regulators designed as operational units, a main unit being installed at a substation of the control and monitoring circuit, by which main unit the individual operational units can be polled, by means of the two busses (3, 4), at predeterminable points in time for status information and control purposes.

9. Constant-current regulator according to one of Claims 1 to 8, which is a constituent of a control and monitoring circuit whose constituents upstream of the constant-current regulator are designed with redundancy.

10. Constant-current regulator according to one of Claims 1 to 9, in which conventional field busses, e.g. MOD busses, PROFI busses, CAN busses or the like, can be used as the busses (3, 4).

11. Constant-current regulator according to one of Claims 1 to 10, in which simple connectors are provided as the control and monitoring inputs.

12. Constant-current regulator according to one of Claims 1 to 11, which can be combined with various loads.

13. Constant-current regulator according to one of Claims 1 to 12, which can be used to monitor and regulate various downstream loads provided in a local area.

## Revendications

1. Stabilisateur de courant pour régler et pour surveiller le courant acheminé à un consommateur en aval ou à plusieurs consommateurs en aval et pour égaliser le courant acheminé au consommateur en aval ou aux consommateurs en aval soit au niveau de réglage soit lorsque le niveau de réglage change, le stabilisateur de courant pouvant être alimenté par l'intermédiaire de deux bus (3, 4) distincts et indépendants l'un de l'autre par des signaux de commande dont le contenu de réglage ou de surveillance est comparable, avec possibilité de contrôler séparément la vraisemblance ou la conformité des signaux de commande provenant de l'un des bus (3) et des signaux de commande provenant de l'autre bus (4) à l'aide d'un microprocesseur (6) du stabilisateur de courant, et de prendre pour base les signaux de commande de l'un (3) ou de l'autre bus (4) si on établit que les signaux de commande de l'un des bus (3) ou de l'autre bus (4) ne sont pas vraisemblables ou conformes au fonctionnement du stabilisateur de courant et le microprocesseur (6) comporte une entrée de commande (5) numérique pour l'un des bus (3) et une entrée de commande (9) en série pour l'autre bus (4).

2. Stabilisateur de courant selon la revendication 1 dont le microprocesseur (6) présente une entrée de commande (5, 9) distincte pour chaque bus (3, 4).

3. Stabilisateur de courant selon la revendication 1 ou 2, dans lequel les entrées de commande (5, 9) du microprocesseur (6) sont binaires et sont isolées l'une de l'autre, du sol et du reste du microprocesseur (6).

4. Stabilisateur de courant selon l'une des revendications 1 à 3, dans lequel, en amont de l'entrée de commande (5) numérique du microprocesseur (6), on a un récepteur-émetteur (8) asynchrone dont le signal de sortie est acheminé à l'entrée de commande (5) numérique du microprocesseur (6) et en amont duquel est placé un émetteur-récepteur (7) isolé galvaniquement, dont le fonctionnement est binaire et qui est raccordé à une première entrée de bus (1) associée à l'un des bus (3).

5. Stabilisateur de courant selon l'une des revendications 1 à 4, dans lequel, en amont de l'entrée de commande (9) en série du microprocesseur (6), on a un autre émetteur-récepteur (10) isolé galvaniquement, dont le fonctionnement est binaire et qui est raccordé à une deuxième entrée de bus (2) associée à l'autre bus (4).

6. Stabilisateur de courant selon la revendication 5, dans lequel le microprocesseur (6), le récepteur-émetteur (8) asynchrone, les deux émetteurs-récepteurs (7, 10) et les deux entrées de bus (1, 2) sont rassemblés dans un bloc plat.

7. Stabilisateur de courant, selon l'une des revendications 1 à 6, qui lorsqu'on remédie à un dysfonctionnement peut être réinitialisé à l'état de fonctionnement prévu au cas où deux bus (3, 4) fonctionnent sans défaut, les signaux de commande de l'un (3) ou de l'autre bus (4) étant ensuite pris pour base du fonctionnement du stabilisateur de courant.

8. Stabilisateur de courant selon l'une des revendications 1 à 7, conçu comme unité de travail d'un circuit de commande et de surveillance formé d'un ou de plusieurs stabilisateurs de courant de ce type servant d'unités de travail, une unité principale à partir de laquelle il est possible d'appeler chacune des unités de travail à des instants prédéfinissables par l'intermédiaire des deux bus (3, 4) étant installée sur une sous-station du circuit de commande et de surveillance afin d'obtenir des informations d'état et d'assurer la commande.

9. Stabilisateur de courant, selon l'une des revendications 1 à 8, qui est un composant d'un circuit de commande et de surveillance dont les composants en amont du stabilisateur de courant sont redondants.

10. Stabilisateur de courant selon l'une des revendications 1 à 9, dans lequel les bus (3, 4) qu'on peut utiliser sont des bus de terrain conventionnels, par exemple entre autres des bus MOD, des bus PROFI, des bus CAN.

11. Stabilisateur de courant selon l'une des revendications 1 à 10, dans lequel les entrées de commande et de surveillance prévues sont des connecteurs simples.

12. Stabilisateur de courant, selon l'une des revendications 1 à 11, qui peut être combiné à différents consommateurs.

13. Stabilisateur de courant selon l'une des revendications 1 à 12, à l'aide duquel il est possible de surveiller et de régler différents consommateurs placés en aval et prévus dans une zone locale.
